# EUROPÄISCHE PATENTSCHRIFT

(11) **EP 3 310 709 B1**
(45) Veröffentlichungstag und Bekanntmachung des Hinweises auf die Patenterteilung: **14.08.2019**
(21) Anmeldenummer: 16735820.9
(22) Anmeldetag: 17.06.2016
(51) Int. Cl.: C01B 3/00, H01M 16/00

(54) **VERFAHREN ZUR SPEICHERUNG VON CHEMISCHER UND ELEKTRISCHER ENERGIE ÜBER THERMODYNAMISCH REVERSIBLE KREISPROZESSE**
METHOD OF STORING CHEMICAL AND ELECTRICAL ENERGY VIA THERMODYNAMICALLY REVERSIBLE CYCLE PROCESSES
PROCÉDÉ POUR STOCKER L'ÉNERGIE CHIMIQUE ET ÉLECTRIQUE AU MOYEN DE CYCLES THERMODYNAMIQUES RÉVERSIBLES

(30) Priorität: 17.06.2015 DE 102015007645
(43) Veröffentlichungstag der Anmeldung: 25.04.2018
(73) Patentinhaber: bw-energiesysteme GmbH, 15526 Bad Saarow (DE)
(72) Erfinder: WOLF, Bodo, M., 87719 Mindelheim (DE)
(74) Vertreter: Zellentin & Partner mbB Patentanwälte
(86) Internationale Anmeldenummer: PCT/EP2016/001022
(87) Internationale Veröffentlichungsnummer: WO 2016/202461

(56) Entgegenhaltungen:
- GB-A- 635 909
- GB-A- 799 551
- JP-A- 2006 008 434
- US-A1- 2005 037 245
- US-A1- 2013 255 272

## Beschreibung

Die Erfindung betrifft ein Verfahren zur Speicherung von chemischer und elektrischer Energie über thermodynamisch reversible Kreisprozesse mit Wasser und Kohlendioxid und im Zusammenwirken mit Metallen der VIII. Hauptgruppe des Periodensystems der Elemente und deren Oxiden, insbesondere von Eisen und Nickel und der Kohlenwasserstoffsynthese.

Das Anwendungsgebiet der Erfindung ist die Nutzung von volatiler regenerativer Energie in der Energiewirtschaft für die bedarfsgerechte Versorgung mit Strom, Wärme, Wasserstoff, Brenn- und Synthesegasen sowie gasförmigen und flüssigen Brenn- und Kraftstoffen in Kommunen, im Gewerbe, in der Industrie, in der Raumfahrt sowie in der Eisenhüttenindustrie für die Direktreduktion von Eisenerz.

Die politische Entscheidung der Industriestaaten über den Beginn der Energiewende durch Ablösung der fossilen und atomaren Brennstoffe durch regenerative Energie, insbesondere in der Stromerzeugung, ist von historischer Bedeutung. Im Ergebnis einer Vielzahl von Studien, stellvertretend soll hier die von Fichtner für das deutsche Bundesland Niedersachsen erarbeitete Studie "Erstellung eines Entwicklungskonzeptes Energiespeicher in Niedersachsen" von Juli 2014 /1/ genannt werden, die, wie andere auch, zu dem Ergebnis kommt, dass elektrische Batterien wirtschaftlich und aus Gründen der Materialien für die Lösung der anstehenden Aufgaben der Energiespeicherung nur bedingt geeignet sind, aber Pumpspeicherwerke, adiabate Druckluftspeicherwerke und die Speicherung von Wasserstoff unter hohen Drücken oder im flüssigen Zustand angewendet werden können und den Stand der Technik repräsentieren.

Der entscheidende Mangel dieser Methoden der Energiespeicherung ist ihre Standortabhängigkeit, die erhebliche Zusatzkosten für die Energiefortleitung und - übertragung zur Folge hat und die vorhandene Synchronisation zwischen Stromerzeugung und -verteilung empfindlich stört. Das eigentliche Ergebnis der Studien ist, dass die Energiewende mit den bekannten Verfahren der Energiespeicherung wegen ungenügender Leistung und Kapazität wirtschaftlich nicht gestaltet werden kann und neue Wege der Energiespeicherung, vor allem bei der standortunabhängigen Speicherung von Strom, gefunden werden müssen. Nach Einschätzung von A. Thess u.a. (Physik Journal 14 (2015) Nr. 2) /2/ zeigen isentrope Strom-Wärme-Strom-Speicher (SWS-Speicher) entsprechend Patent EP 1987299 B1 von 2007 /3/ als reversible thermodynamische Kreisprozesse einen solchen neuen Weg.

Entsprechend dieser Methode wird die rein physikalische adiabate Druckluftspeicherung, z.B. vom Fraunhofer Institut Umsicht, in standortunabhängigen Druckbehältern vorgeschlagen und die bw-energiesysteme GmbH nutzt mit ihrem NaCompEx®-Verfahren die Bindeenthalpie des Stoffpaares Wasser/Natronlauge (DP Nr. 10 2012 021 909 und DP Nr. 10 2013 006 725) /3; 4/ für die drucklose und damit kostengünstigere Energiespeicherung bei Umgebungstemperatur, was auch eine Langzeitspeicherung mit großer Kapazität ermöglicht.

Auch die vorgeschlagene reversible Umwandlung von CaO ↔ Ca(OH)₂ ist ein thermodynamisch reversibler Kreisprozess, der die Differenz der chemischen Bildungsenthalpien dieser Verbindungen für die Speicherung und Rückgewinnung von Energie nutzt. Problematisch ist hier die thermisch/mechanische Standfestigkeit des Branntkalks und des Kalkhydroxids.

Die Speicherung von Luft unter einem Druck von 64 bar ermöglicht bei gleichzeitiger externer Speicherung der Kompressionswärme, die der Druckluft vor ihrer Expansion wieder zu geführt wird, eine Speicherdichte von 10 bis 15 kWh/m³ Druckspeicher.

Bei Verwendung des Stoffpaares Natronlauge/Wasser, als Arbeitsmittel in einem reversiblen Kreisprozess entsprechend /3/ und /4/, sind Speicherdichten größer 50 kWh/m³ Speichervolumen erreichbar. Diese gegenüber dem Stand der Technik deutliche Steigerung der Energiedichte, bei gleichzeitig deutlicher Verbesserung der energetischen Wirkungsgrade für die Speicherung von Energie, bestätigen diese Wege für weitere Verbesserungen des Standes der Technik.

Die US 2005/0037245 A1 beschreibt ein Verfahren zur Umwandlung von Kohlenwasserstoff-Brennstoffen in Wasserstoff und Elektrizität unter Verwendung einer Festoxid-Brennstoffzelle und eines Dampf-Eisen-Prozesses.

Deshalb ist das Ziel der folgenden Erfindung die direkte oder indirekte Umwandlung von Elektroenergie in chemische Energie, deren einfache Speicherung und gegebenenfalls direkte Nutzung und/oder die Rückgewinnung von Elektroenergie daraus und damit die Energiespeicherung für den Tages-, Wochen-, Monats- und Saisonausgleich.

Die Aufgabe der Erfindung besteht somit darin, einen thermodynamisch reversiblen Kreisprozess vorzuschlagen, dessen chemische und thermodynamische Zustandsänderungen eine Umwandlung von Elektroenergie in chemische Energieträger, deren Nutzung zur Bildung von speicherbaren Produkten und deren Rückumwandlung in Elektroenergie oder die direkte Nutzung der chemischen Energieträger ermöglichen.

Erfindungsgemäß werden dafür thermodynamische Systeme Metall-Kohlenstoff-Wasserstoff-Sauerstoff, wie sie im Zeitraum 1970/72 für die technisch realisierte Umwandlung von stickstoffreichem Erdgas in Wasserstoff angewendet wurden, genutzt, wofür von B. Wolf mit der Dissertation "Beitrag zur Verfahrenstechnik des Eisen-Wasserdampf-Prozesses" an der Bergakademie Freiberg 1976/5/ wissenschaftliche Grundlagen im Zusammenhang mit der Auswertung dieser technischen Anwendung vorgelegt und veröffentlicht wurden.

Darauf aufbauend wird die technische Aufgabe der Erfindung gelöst und die Zielstellung erreicht, durch die Gestaltung eines reversiblen elektro-chemischen

Kreisprozesses unter Nutzung des thermodynamischen Systems Kohlenstoff-Wasserstoff-Sauerstoff oder seiner Randsysteme Wasserstoff-Sauerstoff und Kohlenstoff-Sauerstoff mit den Bodenkörpern Eisen und Nickel, wobei
- eine stofflich geschlossene eisen- oder/und nickelhaltige Schüttschicht über einen Gaskreislauf, dessen Gasanteile mit den Metallen und ihren Oxiden chemisch reagieren, mit einer Wasserdampfelektrolyse, einem Sauerstoffspeicher und einer Brennstoffzelle oder einer Brennkammer eines stofflich geschlossenen Kraftprozesses kombiniert,
- der Gaskreislauf über einen primären Kreislauf, der der Schüttschicht Sauerstoff entzieht, und einen sekundären Kreislauf, der Sauerstoff an die Schüttschicht überträgt, realisiert wird, die beide die Schüttschicht im Temperaturbereich von 500 bis 1000 °C und unter Drücken von 1 bis 50 bar, zeitlich unabhängig voneinander, wechselseitig von oben und unten durchströmen und Kohlendioxid, Kohlenmonoxid, Wasserdampf und Wasserstoff als mit Eisen und Nickel chemisch reagierende Gaskomponenten mit zyklisch wechselnder Konzentration enthalten,
- der primäre Gasstrom eine Gas-/Wasserdampf-Elektrolyse durchströmt, die, unter Zuführung von Strom, aus dem Gasgemisch molekularen Sauerstoff abtrennt, der extern gespeichert wird, und damit eine Gasqualität einstellt, die beim Durchströmen metallischer eisen- und nickelhaltiger Formkörper der Schüttschicht unverändert bleibt, aber Wüstit zu Eisen und im weiteren Strömungsverlauf Magnetit zu Wüstit und Nickeloxid zu metallischem Nickel reduziert, den Sauerstoff der Oxide unter Bildung von Wasser und/oder Kohlendioxid chemisch bindet und dabei genau so viel Sauerstoff aus der Schüttschicht aufnimmt, wie in der Elektrolyse abgetrennt wurde, bevor das Gasgemisch des primären Gaskreislaufes mit einer Zusammensetzung, die im thermodynamischen Gleichgewicht zur Phasengrenze Magnetit/Hämatit steht, erneut durch die Elektrolyse geleitet wird,
- während der Gasstrom des sekundären Gaskreislaufes mit einer Gaszusammensetzung, die einem Gleichgewichtsgas der Phase Eisen entspricht und damit durch einen hohen Partialdruck an Wasserstoff- und/oder Kohlenmonoxid gekennzeichnet ist, aus der Schüttschicht einer Brennstoffzelle oder der Brennkammer des geschlossenen Kraftprozesses zugeführt und dort mit dem durch Elektrolyse aus dem Gasgemisch abgetrennten und gespeicherten Sauerstoff unter Ableitung von Elektroenergie oxidiert wird, bevor es, als Abgas der Brennstoffzelle oder der Brennkammer, durch die vom primären Gasstrom reduzierte eisen- und/oder nickelhaltige Schüttschicht mit einer Zusammensetzung, die der Phasengrenze Magnetit/Hämatit entspricht, geleitet wird, die Schüttschicht unter Bildung von Wasserstoff und/oder Kohlenmonoxid wieder oxidiert, sich dabei auf die anfängliche Gaszusammensetzung, die der Phase Eisen entspricht, reduziert und danach erneut der Brennstoffzelle oder Brennkammer zugeführt wird.

Erfindungsgemäß ist auch, dass besonders zum Zwecke der Energiespeicherung mit großer Kapazität und über lange Zeit,
- während des Betreibens des primären Gaskreislaufes, also der Stromeinspeisung, die Strömungsrichtung des Gases durch die Schüttschicht geändert wird und der Schüttschicht von unten Eisenschwamm und/oder Eisenkarbid entnommen und extern gespeichert werden und gleichzeitig von oben magnetithaltige Reaktionsmasse, die der Schüttschicht während des Betriebes des sekundären Gaskreislaufes entnommen wurde, aus einem externen Speicher zugeführt wird,
   und
- beim Betreiben des sekundären Gaskreislaufes, also während der Stromausspeisung, der Schüttschicht von oben Eisenschwamm oder Eisenkarbid zugeführt und gleichzeitig nach unten oxidierte Reaktionsmasse, bevorzugt Magnetit, aus der Schüttschicht abgezogen und einer externen Speicherung zugeführt wird.

### Weiterhin erfindungsgemäß ist, dass

- die primären und sekundären Gaskreisläufe des thermodynamisch reversiblen Kreisprozesses so betrieben werden, dass der primäre Gaskreislauf mit Wasserdampf/Wasserstoff und der sekundäre mit Kohlendioxid/Kohlenmonoxid als Kreislaufgase arbeitet, und
- beim Betreiben des primären Gaskreislaufes mit Wasserdampf/Wasserstoff dem primären Kreisprozess vor der Elektrolyse Wasserdampf zugeführt und nach der Elektrolyse Wasserstoff entnommen wird und/oder dem sekundären Kreisprozess, der die vom primären Gaskreisprozess erzeugten Zwischenprodukte Eisenschwamm oder Eisenkarbid durch Kohlendioxid wieder oxidiert, vor der Schüttschicht externes Kohlendioxid zugeführt und nach dieser Kohlenmonoxid entnommen wird,
- zwei reversible Kreisprozesse phasenversetzt so arbeiten, dass zeitgleich sowohl Wasserstoff als auch Kohlenmonoxid entnommen werden können,
- der entnommene Wasserstoff und das Kohlenmonoxid zu Synthesegas gemischt und in einer Synthese zu Methanol, Methan oder flüssigen Brenn- und Kraftstoffen umgewandelt, gespeichert und im Bedarfsfalle als Reduktionsmittel im primären Gaskreisprozess und/oder in der Brennstoffzelle oder dem geschlossenem Kraftprozess intern als Brennstoff oder extern stofflich oder energetisch genutzt wird.

Bei einem Reduktions-/Oxidations-Zyklus von Magnetit zu Eisen und zurück von Eisen zu Magnetit durch Wasserstoff bzw. Wasserdampf werden entsprechend

3 Fe + 4 H₂O ↔ Fe₃O₄ + 4 H₂

in der Wasserdampfelektrolyse 0,533 m³ Wasserstoff/kg Eisen als Reduktionsgas für den primären Gaskreislauf oder von der Schüttschicht während der Oxidation des Eisens im sekundären Gaskreislauf als Brenngas gebildet. Dieser Wasserstoff steht der Brennstoffzelle für die Stromerzeugung zur Verfügung. Unter der begründeten Annahme, dass sich in der Schüttschicht des Reaktors, als Speicher chemischer Energie, 2000 kg Eisen/m³ Schüttung befinden, ergibt sich ein Wasserstoffäquivalent der eisenhaltigen Schüttung von mehr als 1000 m³/m³ Speichervolumen. Aus der Entwicklung der Wasserdampfelektrolyse ist bekannt, dass der spezifische Strombedarf der Elektrolyse 3 kWh/m³ Wasserstoff betragen kann, d.h. die Reduktion von 1 m³ eisenhaltiger Speichermasse erfordert die Bereitstellung von 3 MWh Elektroenergie für die Elektrolyse. Die chemische Enthalpie des Wasserstoffs im Gasgemisch des sekundären Gaskreislaufes hat das gleiche Arbeitsvermögen, sodass unter Beachtung des elektrischen Wirkungsgrades der Brennstoffzellen aus dem Gas durchaus 2,5 MWh Elektroenergie/m³ Schüttschicht produzieren werden können.

Bezogen auf die Stromausspeisung erreicht das erfindungsgemäße Verfahren gegenüber der vorgeschlagenen, vom Standort unabhängigen Druckluftspeicherung bezogen auf die Stromausspeisung somit eine bis zu 250-fach höhere Speicherdichte bei der Stromspeicherung.

Die zyklische Reduktion und Oxidation von Eisen hat Kristallgitterveränderungen zur Folge, was zur Staubbildung führt und den praktischen Dauerbetrieb des Kreisprozesses stört. Es ist bekannt /5/, dass durch Pelletieren oder Pressen von Eisen- oder Magnetit-/Hämatitstaub mit Tonerde-Schmelzzement im Masseverhältnis 0,70 bis 0,85 zu 0,15 bis 0,30 sich durch Brennen mechanisch und thermisch stabile poröse Körper verschiedener Abmessungen herstellen lassen, die im gebrannten Zustand für die Speicherung in reduzierter und oxidierter Form geeignet sind.

Nach /5/ erreichen solche Formkörper ein Wasserstoffäquivalent von 1000 m³ Wasserstoff/m³ Schüttschicht, was einen Red-Ox-Reaktor für ein elektrisches Arbeitsvermögen von 2,5 MWh entspricht, so dass ein erfindungsgemäßes Speicherkraftwerk mit einem Speicher mit 1000 m³ Eisenschwamm und mit praktisch realisierbaren chemischen Reaktoren mit einem Reaktionsraum von 4 x 100 m³ mit einem großen Pumpspeicherkraftwerk der Leistungsklasse 1000 MW mit einem elektrischen Arbeitsvermögen von 2,5 GWh vergleichbar ist.

Während die zyklische Reduktion/Oxidation und die chemische Reduktion von Eisenmassen im industriellen Maßstab erprobt sind, muss für den Bau solcher Speicherkraftwerke die 1996 in Deutschland abgebrochene Überleitung der Wasserdampfelektrolyse in die industrielle Nutzung und die Entwicklung der Brennstoffzellentechnik für die erforderlichen Leistungsgrößen neu gestartet werden.

Der Vorteil des erfindungsgemäßen reversiblen Kreisprozesses besteht in seiner hohen spezifischen Leistungsfähigkeit, die die des Standes der Technik um bis zu zwei Zehnerpotenzen übertrifft und in der Verwendung von Eisenoxiden, Kohlendioxid und Wasser, die Mensch und Umwelt nicht gefährden und massenweise preiswert zur Verfügung stehen, und darin, dass die Vorrichtungen für die Reduktion und Oxidation von Eisenerz sowie die Wasserelektrolyse und die Brennstoffzelle des Standes der Technik Anwendung finden können. Die Kosten für den Bau und Betrieb der erfindungsgemäßen Speicher für chemische und elektrische Energie werden, bezogen auf die Leistung, in der Größenordnung von adiabaten Druckluftspeichern liegen, aber bezogen auf das Arbeitsvermögen weniger als die Hälfte betragen. Die Erfindung ist neben der bedarfsgerechten Versorgung mit regenerativer Energie mit der erforderlichen Größenordnung auch für die Ablösung der fossilen Brennstoffe in der Eisenmetallurgie und der chemischen Produktion geeignet.

### Ausführungsbeispiel

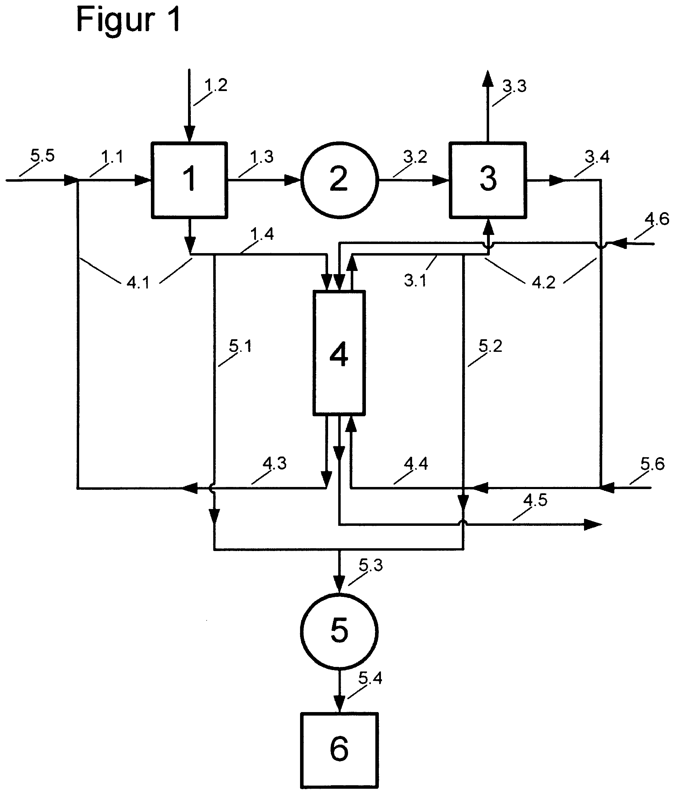

Die Erfindung wird zum besseren Verständnis nicht am Beispiel eines thermodynamischen Systems Eisen/Nickel-Kohlenstoff-Wasserstoff-Sauerstoff, sondern nur am Beispiel der thermodynamischen Randsysteme Eisen-Wasserstoff-Sauerstoff und Eisen-Kohlenstoff-Sauerstoff mithilfe von Figur 1 wie folgt beispielhaft beschrieben:
Ein chemischer Reaktor, in dem eine Schüttschicht aus Eisenpellets 4, hergestellt durch Pelletierung einer Feststoffmischung aus z.B. 10 Masse-% Tonerde-Schmelzzement und 90 Masse-% pulverisiertem Walzzunder, angeordnet ist, wird mit einer Wasserdampfelektrolyse 1, einem Druckbehälter für Sauerstoff 2 und einer Hochtemperaturbrennstoffzelle 3 über die geschlossenen Gaskreisläufe 4.1 und 4.2 verbunden, die die Schüttschicht wechselseitig von oben und von unten durchströmen.

Der Gasstrom 4.1 hat nach Austritt aus der Wasserdampfelektrolyse 1 einen für die Reduktion von Magnetit zu Eisenschwamm ausreichend hohen Wasserstoffanteil, durchströmt die Schüttschicht 4 mit einer Temperatur von 600 bis 1000 °C von oben, nimmt dabei den Sauerstoff der Eisenoxide Magnetit und Wüstit auf, wodurch sich Wasserstoff in Wasserdampf umwandelt, und strömt unten aus der Schüttschicht 4 als Reduktionsrestgas 1.1 mit hohem Wasserdampfanteil zur Wasserdampfelektrolyse 1 zurück, wo das Reduktionsrestgas 1.1 durch die zugeführte Elektroenergie 1.2 unter Temperaturen von 700 bis 900 °C in Reduktionsgas 1.4 mit hohem Wasserstoffanteil umgewandelt wird, indem der Wasserdampf im Reduktionsrestgas 1.1 durch die zugeführte Elektroenergie 1.2 vollständig oder teilweise in Wasserstoff und Sauerstoff zerlegt wird. Während der Sauerstoff, wie bei der Wasser- und Wasserdampfelektrolyse üblich, über 1.3 aus der Elektrolyse 1 abgeleitet und in einem Druckbehälter 2 gespeichert wird, durchströmt der Wasserstoff als Reduktionsgas 1.4 erneut die Eisenpellet-Schüttschicht 4 und reduziert durch erneute Umwandlung von Wasserstoff in Wasserdampf weiteres Eisenoxid vom Magnetit (Fe₃O₄) zu Wüstit (FeO) und Wüstit (FeO) zu Eisen (Fe).

Die Phasengrenze zwischen Magnetit und Hämatit liegt im thermodynamischen System Eisen-Wasserstoff-Sauerstoff nahe am Wasser, so dass eine fast vollständige Umwandlung des Wasserstoffs durch den Sauerstoff des Magnetit in Wasser entsprechend

Fe₃O₄ + 4 H₂ ↔ 3 Fe + 4 H₂O

erreicht werden kann. Dementsprechend wandelt 1 kg Magnetit 0,386 m³ Wasserstoff in 0,310 kg Wasserdampf, der danach in der Wasserdampfelektrolyse durch Elektroenergie in 0,386 m³ Wasserstoff und 0,193 m³ Sauerstoff aufgespalten wird und es entstehen 0,724 kg Eisen/kg Magnetit. Bei einem Strombedarf der Wasserdampfelektrolyse von 3,0 kWh/m³ Wasserstoff beträgt der Strombedarf für die Reduktion von 1 kg Magnetit zu 0,724 kg Eisen somit 1,158 kWh.

Bei einem Eisenanteil in der Schüttschicht 4 von 2000 kg/m³ Schüttung beträgt der Strombedarf für die Wasserdampfelektrolyse ca. 3,2 MWh/m³ Eisenpellets, d.h. ein chemischer Reaktor zur Reduktion von Magnetit zu Eisenschwamm mit den Abmessungen von 10 x 10 x 10 m kann 3,2 GWh elektrische Energie aufnehmen und in speicherbare chemische umwandeln.

Die Rückumwandlung der chemischen Energie des Eisens in Elektroenergie erfolgt über den Gaskreislauf 4.2, der die Schüttschicht von unten mit wasserdampfreichem Abgas 3.4 aus einer Hochtemperaturbrennstoffzelle oder einer Brennkammer eines technische Arbeit leistenden Kraftprozesses 3 durchströmt, das Eisen wieder zu Magnetit oxidiert und dabei den Wasserdampf zu Wasserstoff 3.1 reduziert, der mit dem Sauerstoff 3.2 aus dem Druckgefäß 2 in der Brennstoffzelle 3 unter Abgabe von Elektroenergie 3.3 oder einer Brennkammer eines Kraftprozesses zu Abgas 3.4 unter Abgabe von technischer Arbeit verbrannt wird und so für einen neuen Kreislauf zur Verfügung steht.

Der Massestrom des Gaskreislaufes 4.1 bestimmt die Leistung der Stromaufnahme des erfindungsgemäßen reversiblen Kreisprozesses und der des Gaskreislaufes 4.2 dessen Leistung bei der Stromausspeisung und die im Schichtenspeicher 4 mit den Pellets deponierte Eisenmasse die elektrische Arbeit des Kreisprozesses über einen Zyklus zwischen Beladung und Entladung durch Reduktion und Oxidation des Eisens der Pellets, oder anders formuliert, die Beladung und Entladung der Schüttschicht mit oder von Sauerstoff.

Wird eine Brennstoffzelle mit einer elektrischen Leistung von 100 MW installiert, dann kann ein erfindungsgemäßes Speicherkraftwerk mit einem Schüttschichtvolumen von 10 m x 10 m x 10 m ca. 30 h mit dieser Leistung Elektroenergie ausspeisen.

Das Arbeitsvermögen des Speicherkraftwerkes kann erfindungsgemäß erhöht werden, indem bei hohem Stromangebot während der Phasen der Schüttschichtreduktion Eisenschwamm oder Eisenkarbid 4.5 aus der Schüttschicht 4 nach unten, im Austausch zu von oben zugeführtem Magnetit 4.6, ausgetragen, gekühlt und gespeichert wird. Die Speicherung und der Transport von Eisenschwamm und Eisenkarbid ist in der Eisenhüttenindustrie Stand der Technik mit einem Umschlag von mehreren Millionen t/a. Neben der Verwendung des so gewonnenen Eisenschwamms und -karbids in der Metallurgie ist deren Einsatz für die Leistungserhöhung eines erfindungsgemäßen Speicherkraftwerks vorteilhaft, da bei deren Rückführung 4.6 über den sekundären Gaskreislauf in den reversiblen Kreisprozess die Bereitstellung von Wasserstoff 3.1 für die Stromerzeugung gesteigert wird und der sekundäre Gaskreislauf unabhängig vom primären betrieben werden kann.

Der Betrieb des primären Gaskreislaufes mit Wasser und des sekundären mit Kohlendioxid kann erfindungsgemäß genutzt werden für die Produktion von Wasserstoff 5.1 und Kohlenmonoxid 5.2 und damit zu Synthesegas 5.3 z.B. für die Herstellung von Methanol 5.4 im Synthesereaktor 5, das in 6 gespeichert und bedarfsgerecht für die Stromerzeugung in der Brennstoffzelle 3 oder extern für die chemische Industrie, aber auch für die Produktion von flüssigen Kraft-und Brennstoffen verwendet werden kann.

### Kurzfassung

Die Erfindung betrifft einen elektrochemischen reversiblen Kreisprozess zur Speicherung von chemischer und elektrischer Energie, mit primärem und sekundärem Gaskreislauf, der zyklisch eine eisen- und/oder nickelhaltige Schüttschicht durchströmt und die Schüttschicht einerseits mit einer Wasserelektrolyse, über die die Elektroenergie in den Kreisprozess eingebunden wird, und einer Brennstoffzelle, über die die gespeicherte chemische Energie in Form von Elektroenergie wieder ausgespeist wird. Die Aufnahme und Ausspeisung von elektrischer Energie mit einer gegenüber dem Stand der Technik bis 250-fach höheren Energiedichte erfolgt über die Reduktion und Oxidation von Metallen der VIII. Hauptgruppe des Periodensystems der Elemente.

### Bezugszeichenliste

- 1: Wasserdampfelektrolyse
- 1.1: Zuführung Wasserdampf
- 1.2: Zuführung Elektroenergie
- 1.3: Ableitung molekularer Sauerstoff
- 1.4: Reduktionsgas/Wasserstoff
- 2: Sauerstoffspeicher
- 3: Brennstoffzelle/Kraftprozess
- 3.1: Zuführung von Wasserstoff
- 3.2: Zuführung von Sauerstoff
- 3.3: Abführung von Elektroenergie oder technischer Arbeit
- 3.4: Abgas/Wasserdampf
- 4: Eisenhaltige Schüttschicht
- 4.1: Primärer Gaskreislauf
- 4.2: Sekundärer Gaskreislauf
- 4.3: Wasserdampf zur Elektrolyse
- 4.4: Wasserdampf zur Oxidation der Schüttschicht
- 4.5: Austrag von Eisenschwamm und Karbid oder Magnetit
- 4.6: Zuführung von Magnetit oder Eisenschwamm und Karbid
- 5: Methanolsynthese
- 5.1: Entnahme von Wasserstoff
- 5.2: Entnahme von Kohlenmonoxid
- 5.3: Synthesegas
- 5.4: Methanol
- 5.5: Zuführung von externem Wasserdampf
- 6: Methanolspeicher

## Patentansprüche

1. Verfahren zur Speicherung von chemischer und elektrischer Energie über thermodynamisch reversible Kreisprozesse, wobei ein primärer (4.1) und sekundärer (4.2) Gaskreislauf, beide bestehend aus einem Gasgemisch, dessen Hauptbestandteile Wasserdampf und/oder Kohlendioxid und Wasserstoff und/oder Kohlenmonoxid sind, nacheinander und zeitlich unabhängig voneinander eine Schüttschicht (4) aus Eisen und/oder Nickel enthaltende porösen Formkörpern durchströmen, **dadurch gekennzeichnet, dass**
• der primäre Gaskreislauf (4.1) unter Bildung von Wasserdampf und/oder Kohlendioxid aus der Schüttschicht (4) Sauerstoff aufnimmt, die Metalloxide der Schüttschicht reduziert und der vom Gas aufgenommene Sauerstoff der Metalloxide mit dem Reduktionsrestgas (1.1) einer Wasserdampfelektrolyse (1) zugeführt und dort unter Zuführung von Elektroenergie (1.2) und Bildung von Wasserstoff (1.4) und/oder Kohlenmonoxid als molekularer Sauerstoff (1.3) aus dem Gasgemisch abgetrennt und einem Speicher (2) zugeführt wird,
• und danach von dort über (3.2) der Brennstoffzelle oder der Brennkammer eines geschlossenen technische Arbeit leistenden Kraftprozesses (3) im sekundären Gaskreislauf zugemischt wird und unter Bildung von Wasserdampf und/oder Kohlendioxid (3.4) und Abführung von Elektroenergie (3.3) Abgas bildet, das über (3.4) die reduzierten metallhaltigen Formkörper der Schüttschicht (4) durchströmt und diese unter Bildung von Wasserstoff und/oder Kohlenmonoxid wieder oxidiert, den Stoffkreislauf und damit den thermodynamisch reversiblen Kreisprozess schließt und die Startbedingungen für den primären Gaskreislauf wiederherstellt.

2. Verfahren nach 1, **dadurch gekennzeichnet, dass** der primäre Gaskreislauf (4.1) mit Wasserdampf und der sekundäre mit Kohlendioxid betrieben wird, wobei aus dem primären Kreislauf nach der Elektrolyse Wasserstoff (5.1) und aus dem sekundären Kreislauf nach der Schüttschicht (4) Kohlenmonoxid (5.2) entnommen, zu Synthesegas (5.3) gemischt und durch Synthese (5) zu Produkten wie Methanol, Methan oder anderen gasförmigen oder flüssigen Brenn- und Kraftstoffen umgewandelt (5.4) und gespeichert (6) werden und die Gasentnahmen durch Zuführung von Wasserdampf (5.5) aus der Synthese oder anderen Quellen vor der Elektrolyse (1) und von Kohlendioxid (5.6) vor der Schüttschicht (4) zugeführt und die Bilanzen der Gaskreisläufe ausgeglichen werden.

3. Verfahren nach 1 und 2, **dadurch gekennzeichnet, dass** die Gaskreisläufe im Temperaturbereich zwischen 600 und 1000 °C und unter einem Gasdruck von 1 bis 50 bar durchgeführt und die Syntheseprodukte vollständig oder teilweise über den primären Gaskreislauf für die Reduktion von Metalloxiden in der Schüttschicht (4) und zur Leistungserhöhung in der Brennstoffzelle oder der Brennkammer des Kraftprozesses (3) in den Kreisprozess zurückgeführt werden.

4. Verfahren nach 1 bis 3, **dadurch gekennzeichnet, dass** während der Stromzuführung zum primären Gaskreislauf (4.1) die Gaszirkulation durch die Schüttschicht umgekehrt und aus der Schüttschicht (4) nach unten Eisenschwamm und/oder Eisenkarbid entnommen werden und die Entnahme durch Zuführung von Magnetit zur Schüttschicht von oben ausgeglichen wird.

5. Verfahren nach 1 bis 4, **dadurch gekennzeichnet, dass** während der Stromabführung aus dem sekundären Gaskreislauf (4.2) aus der Schüttschicht nach unten Magnetit entnommen wird und die Entnahme durch Zuführung von Eisenschwamm oder Eisenkarbid von oben ausgeglichen wird.

6. Verfahren nach 1 bis 5, **dadurch gekennzeichnet, dass** die Formkörper der metallhaltigen Schüttschicht (4) als Pellets eine gasdurchlässige Schüttschicht bilden oder in anderer Form gasdurchlässig im Gaskreislauf angeordnet sind.

7. Verfahren nach 6, **dadurch gekennzeichnet, dass** die Formkörper der metallhaltigen Schüttschicht (4) aus einer Mischung von Metall- oder Metalloxidpulver und einem Feuerzement als Bindemittel hergestellt werden und deren temperaturwechselbeständiger Zustand durch Sinterung des Zements hergestellt wird.

## Claims

1. A method for storing chemical and electrical energy via thermodynamically reversible cycle processes, wherein
a primary (4.1) and secondary (4.2) gas cycle, both consisting of a gas mixture the main constituents of which being water vapor and/or carbon dioxide and hydrogen and/or carbon monoxide, flow successively and time-independently of each other through a packed bed (4) of porous shaped bodies containing iron and/or nickel , **characterized in that**
• the primary gas cycle (4.1) absorbs oxygen from the packed bed (4) thereby forming water vapor and/or carbon dioxide, the metal oxides of the packed bed are reduced and the oxygen of the metal oxides absorbed by the gas together with the residual reduction gas (1.1) is supplied to a water vapor electrolysis (1) and is separated there as molecular oxygen (1.3) from the gas mixture under supply of electric energy (1.2) and formation of hydrogen (1.4) and/or carbon monoxide and supplied to a storage (2),
• and subsequently from there via (3.2) is added to the fuel cell or the combustion chamber of a closed technical work-performing power process (3) in the secondary gas cycle and, forming water vapor and/or carbon dioxide (3.4) and discharging electric energy (3.3), forms off-gas which flows via (3.4) through the reduced metal-containing shaped bodies of the packed bed (4) and re-oxidizes them to form hydrogen and/or carbon monoxide, closes the material cycle and, thus, the thermodynamically reversible cycle and restores the starting conditions for the primary gas cycle.

2. The method according to 1, **characterized in that** the primary gas cycle (4.1) is operated with water vapor and the secondary with carbon dioxide, wherein hydrogen (5.1) is withdrawn from the primary cycle after electrolysis and carbon monoxide (5.2) from the secondary cycle after the packed bed (4), which are mixed to give synthesis gas (5.3) and are converted by synthesis (5) to products such as methanol, methane or other gaseous or liquid fuels (5.4) and stored (6) and the gas withdrawals are fed under supply of water vapor (5.5) from the synthesis or other sources before the electrolysis (1) and of carbon dioxide (5.6) before the packed bed (4) and the balances of the gas cycles are compensated.

3. The method according to 1 and 2, **characterized in that** the gas cycles are carried out in a temperature range between 600 and 1000 °C and under a gas pressure of 1 to 50 bar and the synthesis products are recycled completely or partially to the cycle process via the primary gas cycle for the reduction of metal oxides in the packed bed (4) and to increase the power in the fuel cell or the combustion chamber of the power process (3).

4. The method according to 1 to 3, **characterized in that** during the power supply to the primary gas cycle (4.1), the gas circulation through the packed bed is reversed and sponge iron and/or iron carbide are removed downwards from the bulk bed (4) and the removal is compensated by supplying magnetite to the packed bed from above.

5. The method according to 1 to 4, **characterized in that** during the power output from the secondary gas cycle (4.2) magnetite is removed downwards from the packed bed and the removal is compensated by supplying sponge iron or iron carbide from above.

6. The method according to 1 to 5, **characterized in that** the shaped bodies of the metal-containing packed bed (4) form a gas-permeable packed bed as pellets or are gas-permeably arranged in another form in the gas circulation.

7. The method according to 6, **characterized in that** the shaped bodies of the metal-containing packed bed (4) are produced from a mixture of metal powder or metal oxide powder and a fire cement as a binder and the temperature-change-resistant state of which is obtained by sintering the cement.

## Revendications

1. Procédé pour l'accumulation d'énergie chimique et électrique via des processus cycliques réversibles du point de vue thermodynamique ; dans lequel un circuit primaire pour les gaz (4.1) et un circuit secondaire pour les gaz (4.2), les deux étant constitués d'un mélange de gaz dont les constituants principaux sont de la vapeur d'eau et/ou du dioxyde de carbone et de l'hydrogène et/ou du monoxyde de carbone, traversent l'un après l'autre et indépendamment l'un de l'autre dans le temps un lit à garnissage (4) réalisé à partir de corps moulés poreux contenant du fer et/ou du nickel ; **caractérisé en ce que**
• le circuit primaire pour les gaz (4.1) absorbe l'oxygène à partir du lit à garnissage (4) tout en formant de la vapeur d'eau et/ou du dioxyde de carbone, réduit les oxydes métalliques du lit à garnissage, et l'oxygène des oxydes métalliques prélevé à partir du gaz est acheminé avec le gaz résiduel de la réduction (1.1) à une électrolyse de vapeur d'eau (1) et, à cet endroit, avec un apport d'énergie électrique (1.2) et une formation d'hydrogène (1.4) et/ou de monoxyde de carbone, est séparé sous la forme d'oxygène moléculaire (1.3) à partir du mélange de gaz et est acheminé à un accumulateur (2) ;
• et ensuite, à partir de là, via (3.2) est ajouté par mélange à la pile à combustible ou à la chambre de combustion d'un processus générateur d'énergie (3) produisant un travail technique en circuit fermé, par mélange au circuit secondaire pour les gaz et, tout en formant de la vapeur d'eau et/ou du dioxyde de carbone (3.4) et tout en évacuant l'énergie électrique (3.3), génère des gaz d'échappement qui traversent le lit à garnissage (4) via les corps moulés contenant du métal qui a été réduit via (3.4), et oxydent à nouveau les corps en question tout en formant de l'hydrogène et/ou du monoxyde de carbone, boucle le cycle de matières, et partant le processus cyclique réversible du point de vue thermodynamique, et rétablit les conditions de départ pour le circuit primaire pour les gaz.

2. Procédé selon la 1, **caractérisé en ce que** le circuit primaire pour les gaz (4.1) est actionné avec de la vapeur d'eau et le circuit secondaire pour les gaz est actionné avec du dioxyde de carbone ; dans lequel on prélève, à partir du circuit primaire, après l'électrolyse, de l'hydrogène (5.1) et à partir du circuit secondaire, après le lit à garnissage (4), du monoxyde de carbone (5.2), on les mélange pour obtenir un gaz de synthèse (5.3), et on les transforme (5.4) par synthèse pour obtenir des produits tels que du méthanol, du méthane et d'autres combustibles et carburants gazeux ou liquides, et on les accumule (6), et on achemine les prélèvements gazeux par alimentation de vapeur d'eau (5.5) à partir de la synthèse ou à partir d'autres sources avant l'électrolyse (1), et de dioxyde de carbone (5.6) avant le lit à garnissage (4) et on équilibre les bilans des circuits pour les gaz.

3. Procédé selon les 1 et 2, **caractérisé en ce qu'**on met en oeuvre les circuits pour les gaz dans la plage de températures entre 600 et 1000 °C et sous une pression de gaz de 1 à 50 bars et on renvoie les produits de synthèse de manière complète ou de manière partielle via le circuit primaire pour les gaz pour la réduction des oxydes métalliques dans le lit à garnissage (4) et pour une augmentation du rendement dans la pile à combustible ou dans la chambre de combustion du processus générateur d'énergie (3) dans le processus cyclique.

4. Procédé selon les 1 à 3, **caractérisé en ce que**, au cours de l'alimentation en courant du circuit primaire pour les gaz (4.1), la circulation des gaz à travers le lit à garnissage est inversée et, à partir du lit à garnissage (4), vers le bas, on prélève de l'éponge de fer et/ou du carbure de fer et on compense le prélèvement via une alimentation en magnétite du lit à garnissage à partir du haut.

5. Procédé selon les 1 à 4, **caractérisé en ce que**, au cours de l'évacuation de courant, à partir du circuit secondaire pour les gaz (4.2), on prélève de la magnétite hors du lit à garnissage vers le bas et on compense le prélèvement via une alimentation en éponge de fer ou en carbure de fer à partir du haut.

6. Procédé selon les 1 à 5, **caractérisé en ce que** les corps moulés du lit à garnissage (4) contenant du métal, sous la forme d'agglomérés, forment un lit à garnissage qui peut être traversé par des gaz, ou sont disposés sous une forme différente pour pouvoir être traversés par les gaz dans le circuit pour les gaz.

7. Procédé selon la 6, **caractérisé en ce que** les corps moulés du lit à garnissage (4) contenant du métal sont fabriqués à partir d'un mélange d'une poudre métallique ou d'une poudre d'oxyde métallique et d'un ciment réfractaire faisant office de liant, et dont l'état qui permet de résister au changement de température est fourni par le frittage du ciment.
